# EUROPEAN PATENT APPLICATION

(11) **EP 1 748 198 A2**
(43) Date of publication of application: **31.01.2007**
(21) Application number: 06253904.4
(22) Date of filing: 26.07.2006
(51) Int. Cl.: F16B 25/10

(54) **Hollow self-drilling fastener**

(30) Priority: 27.07.2005 US 191187
(71) Applicant: SIMPSON STRONG-TIE COMPANY, INC., Dublin, California 94568-3166 (US)
(72) Inventor: Pryor, Steven E., Dublin California 94568 (US)
(74) Representative: Booth, Catherine Louise

(57) **Abstract**

A self-drilling fastener (100) capable of connecting two or more structural members (120, 122) of a construction under high loads.

## Description

### BACKGROUND OF THE INVENTION

### Field of the Invention

The present invention relates to fasteners, and in particular to fasteners having load capacities similar to bolts but which require no pre-drilling.

### Description of the Related Art

Bolts are commonly used for fastening of high load structural members in light framed constructions. A bolted connection typically includes a threaded bolt fit within a pre-drilled bore hole formed through the members to be connected, and a threaded nut tightened on the protruding end of the bolt to fasten the structural members together. Often, high load bolted connections will comprise several bolts at the interface between adjoined structural members.

The predrilled bore hole diameter is preferably provided 0.79 mm to, at most, 1.59 mm (1/32^{nd} to, at most, 1/16^{th} inch) larger than the nominal bolt diameter. However, it frequently happens during construction that the predrilled bore holes are made larger than this range to facilitate ease of construction. This relatively larger bore hole diameter often goes unnoticed during inspection due to the bolt head and nut entirely covering the predrilled bore hole.

While relatively larger predrilled bore holes may make it easier to construct a bolted connection, bolted connections with such relatively larger bore holes present significant disadvantages in the finished structure, particularly when resisting shear loads typically applied to such connections.

First, a difference in diameter between the bore hole and bolt allows for acceleration of the bolt within the bore hole under shear loads. This acceleration transfers greater stresses to the adjoining structural members. This acceleration also creates impact forces in the bore holes, thereby increasing the chance that the structural members will split or fracture at the bolted connection. Such impact forces within bolted connections can be particularly devastating when the shear loads are cycling loads as they are in earthquakes and hurricanes. In such situations, each reversal of the shear loading tends to widen the bore hole resulting in even greater accelerations and eventual failure of the bolted connection. It is noteworthy that even properly sized bore holes allow for some play between the bore hole and bolt, thus allowing the disadvantageous acceleration and impact loads described above.

A further disadvantage to conventional bolted connections is that, in bolted connections comprising a plurality of bolts, non-uniform clearances within the various bolts and bore holes can result in non-uniform loading of the various bolts. Thus, some bolts wind up bearing more of the load than others and are subject to fatigue and failure at a greater rate than other bolts in the structural connection.

The problem of acceleration, impact loads and uneven load distribution is largely alleviated in the use of self-drilling screws, such as for example Simpson Strong-Drive® screws described in U.S. Patent No. 6,109,850, assigned to Simpson Strong-Tie Company, Inc. of Pleasanton, CA, which patent is incorporated herein in its entirety. The self-drilling nature of the screw into its receiving member ensures a tight fit and prevents any play between the screw and bore formed thereby. However, conventional screws are not able to support the same loads as bolted connections and are conventionally not suitable for fastening high load structural members.

### SUMMARY OF THE INVENTION

From a first broad aspect, in accordance with the present invention, there is provided a fastener for fastening together two or more structural members in a construction. In a preferred embodiment at least, the fastener includes helical threads formed along a portion of an outer surface of the fastener for pulling the distal end of the fastener into at least one of the structural members. The fastener further includes a cutting surface provided in an annular configuration at the distal end of the fastener for cutting into the at least one structural member as the helical threads pull the distal end into the at least one structural member. A cylindrical bore is further formed in the distal end of the fastener and through at least a portion of the fastener, the bore capable of receiving a plug from the structural member. The plug is cut by the cutting surface as the fastener is pulled into the at least one structural member.

The cutting surface may be formed by a plurality of cutting teeth. In preferred embodiments of the invention, the teeth and helical threads are formed in such a way that the helical threads pull the fastener in at a rate at which the cutting teeth may smoothly cut into one or both structural members. The plug formed from the structural member and received within the cylindrical bore adds to the strength and performance of the fastener under shear loads.

From a second broad aspect, in accordance with the present invention, there is provided a method of fastening together two or more structural members in a construction.

### BRIEF DESCRIPTION OF THE DRAWINGS

The present invention will now be described with reference to the drawings in which:
FIGURE 1 is a perspective view of a self drilling fastener according to embodiments of the present invention;
FIGURE 2 is a side view of the self drilling fastener according to embodiments of the present invention;
FIGURE 3 is a top view of the self drilling fastener according to embodiments of the present invention;
FIGURE 4 is a bottom view of the self drilling fastener according to embodiments of the present invention;
FIGURE 5 is a cross-sectional view of the fastener according to embodiments of the present invention through line 5-5 of Fig. 2;
FIGURE 6 is a cross-sectional view of a section of threads of the fastener according to embodiments of the present invention through line 6-6 of Fig. 5;
FIGURE 7 is a side view of the cutting teeth of the fastener according to embodiments of the present invention through line 7-7 of Fig. 5;
FIGURE 8 is a circular view of the cutting teeth of the fastener according to embodiments of the present invention through line 8-8 of Fig. 4;
FIGURE 9 is a top view of the cutting teeth of the fastener according to embodiments of the present invention through line 9-9 of Fig. 8; and
FIGURES 10A-10C are cross-sectional views of the fastener according to embodiments of the present invention being driven into a structural member.

### DETAILED DESCRIPTION

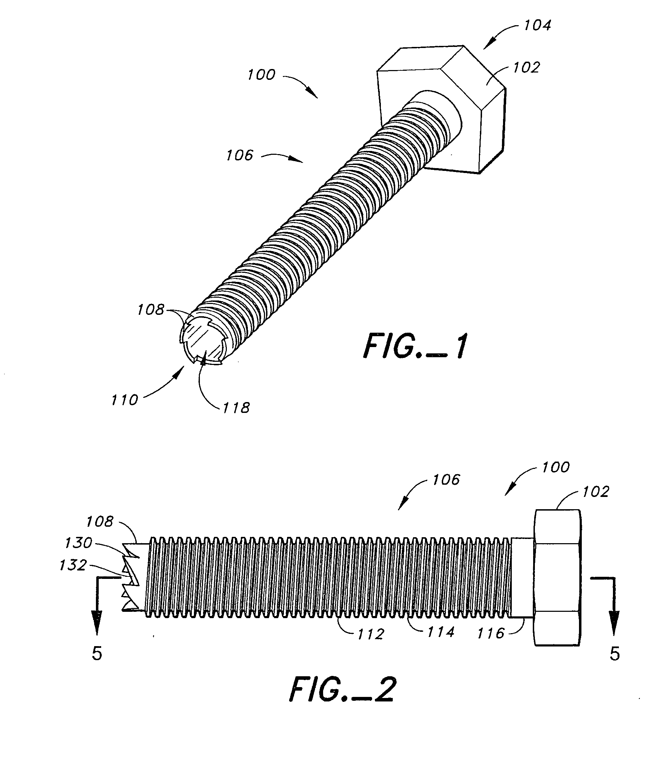

Embodiments of the present invention will now be described with reference to Figs. 1-10C, which in general relate to a self-drilling fastener capable of supporting high loads. As used herein, the term "fastener" is used to describe any of a variety of elongate elements such as for example bolts, screws, lag screws and/or anchors having features of the present invention for fastening members together as described hereinafter. It is understood that the present invention may be embodied in many different forms and should not be construed as being limited to the embodiments set forth herein. Rather these embodiments are provided so that this disclosure will be thorough and complete and will fully convey the invention to those skilled in the art. Indeed, the invention is intended to cover alternatives, modifications and equivalents of these embodiments, which are included within the scope and spirit of the invention as defined by the appended claims. Furthermore, in the following detailed description of the present invention, numerous specific details are set forth in order to provide a thorough understanding of the present invention. However, it will be clear to those of ordinary skill in the art that the present invention may be practiced without such specific details.

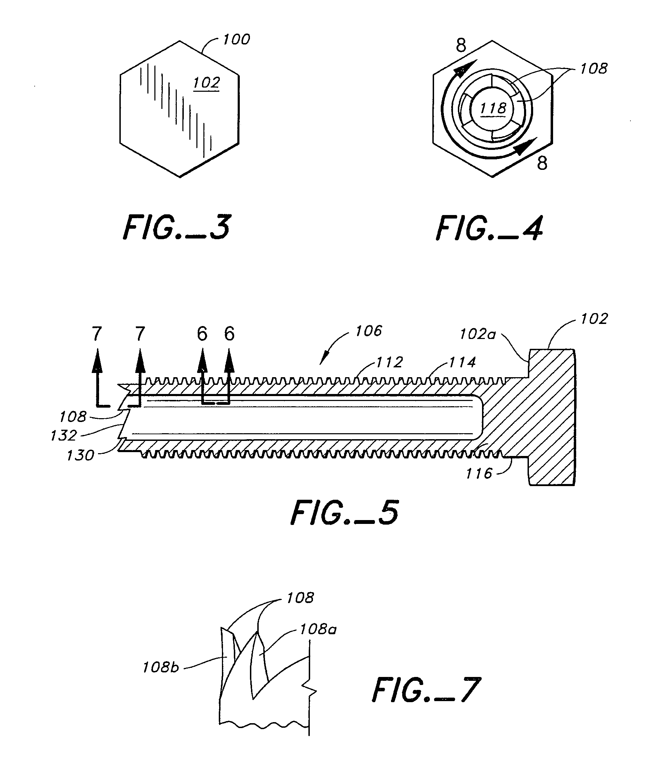

Referring now to Figs. 1 and 2, there is shown a self-drilling fastener 100, including a head 102 at a proximal end 104 of the fastener, a shank 106 extending from the head 102, and cutting teeth 108 at a distal end 110 of the fastener opposite the proximal end 104. The shank 106 includes a threaded portion 112 having helical threads 114, and the shank 106 includes an unthreaded shank portion 116 between the head 102 and the threaded portion 112. As seen in Figs. 1, 4 and 5 for example, fastener 100 further includes a cylindrical bore 118 formed through the distal end 110 and extending at least part way through the shank 106 toward the proximal end 104 of fastener 100.

In embodiments of the invention, the head 102 may have a diameter of about 38.1 mm (1.5 inches) and may be about 12.7 mm (0.5 inches) in thickness. These dimensions may vary in alternative embodiments. To accommodate a manual or power driven tool, the head 102 may be hexagonal in shape, though other known shapes are contemplated.

In embodiments of the invention, the overall length of the fastener from proximal end 104 to distal end 110 may be about 127 mm (5 inches). The unthreaded shank portion 116 may be about 6.4 mm (about 0.25 inches) and the threaded portion 112 may be about 101.6 mm (about 4 inches). The diameter of the unthreaded shank portion 116 and the outer diameter of the threaded portion 112 may be about 22.2 mm (7/8 inches). It is understood that these dimensions are by way of example only, and each of these dimensions may vary in alternative embodiments. The fastener 100 may be manufactured from 1022 steel (SAE Grade 5) with a finish coat of zinc and dichromate. Other materials are contemplated, including for example other metals such as bronze and aluminum castings, and hard plastics/composites.

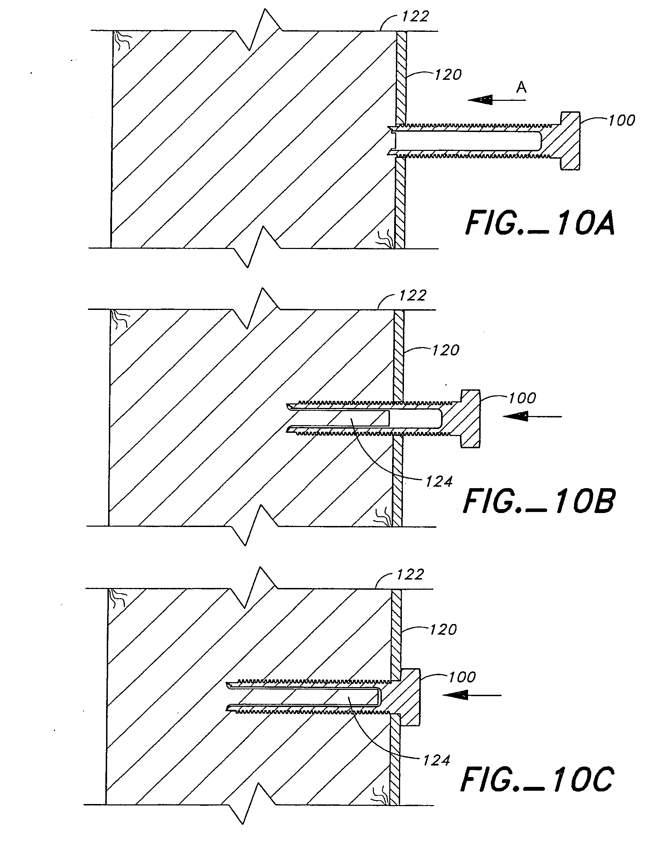

Figs. 10A-10C illustrate an example of how fastener 100 may operate to fasten together two structural members 120 and 122. In one embodiment of the invention, the structural member 120 may be a steel structural member which is to be affixed to a wooden structural member 122. The steel structural member may be a connector, holdown or other steel plate. It is understood however that the fastener 100 may be used to connect a wide variety of other structural members. For example, the structural members that may be affixed by fastener 100 may alternatively both be wood, the members may be wood and masonry, or the members may be steel and masonry. Other structural members may be connected using the fastener 100 according to the present invention, including for example concrete with any of the above structural members.

Moreover, while Figs. 10A-10C show a relatively thin member 120 being fastened to a relatively thick member 122, it is understood that the fastener 100 may operate to fasten members of varying relative thicknesses in alternative embodiments. Moreover, while two structural members are shown being fastened by fastener 100, it is understood that greater than two structural members may be affixed together by a single fastener 100 in alternative embodiments.

In operation, the distal end 110 of the fastener 100 is positioned at a point of entry into the structural member 120. In some embodiments, for example where the structural members are both formed of wood, the fastener may self-drill through both members 120, 122 to affix those members together. In other embodiments, for example where the structural member 120 is a steel plate, the first member 120 may have a preformed hole for receiving the fastener. In this instance, the fastener 100 is placed through the preformed hole in structural member 120 and against a point of entry in the second structural member 122. In either case, to insert the fastener 100, force is applied in the direction of arrow A on the head 102 of the fastener 100 while rotating the fastener 100 in a first direction so that cutting teeth 108 begin to cut into the structural member(s) 120, 122 as shown in Fig. 10A. When helical threads 114 engage the members 120 and/or 122, the threads will pull the shank 106 further into the members 120, 122 upon continued rotation in the first direction as shown in Fig. 10B until the head 104 is flush against the member 120 as shown in Fig. 10C. Where member 120 is for example wood, it is understood that a countersink (not shown) may be provided in the member 120 at the point of entry of the fastener so that the proximal end of fastener is flush with the outer surface of member 120 upon full insertion of the fastener into the members 120, 122.

As the fastener is driven into the structural members 120, 122, the cutting teeth 108 make an annular cut into member(s) 120 and/or 122 so that a cylindrical portion of the structural member(s), referred to herein as plug 124, is left intact in the structural member(s), which plug fills cylindrical bore 118 of fastener 100 as the fastener is driven into the members 120, 122. In embodiments of the invention, the provision of the plug 124 with cylindrical bore 118 increases the strength and performance of the fastener 100 under shear loads. After being cut by teeth 108, the plug 124 may be a single cylindrical piece, or it may chip, splinter, break or otherwise be formed of more than one unitary piece, and still improve the strength and performance of the fastener 100 under shear loads.

In embodiments of the present invention, the configuration of the cutting teeth 108 is related to the helical threads in that the teeth configuration and thread pitch are provided to allow the teeth to cut smoothly into the members as the fastener is pulled into the members by the helical threads. For example, if the thread pitch (*i.e*., the number of helical threads per inch along the shank) is low so that the helical threads pull the fastener into the members relatively quickly, then if the teeth are not able to cut quickly enough, large compressive forces may be generated at the distal end of the fastener as it is pulled into the members. These forces may make it difficult to drive the fastener into the members, and, if sufficiently large, may result in "blow out," where the structural member splits near the distal surface of one or both structural members.

In an embodiment of the present invention, the fastener may be an about 22.2 mm (7/8 inch) fastener having an outer diameter of the shank 106 of about 22.2 mm (7/8 inches). In such an embodiment, the pitch of helical threads 114 may be between about 0.31 and 0.59 threads per mm (between 8 and 15 threads per inch), or more specifically between about 0.31 and 0.47 threads per mm (8 and 12 threads per inch), or more specifically about 0.39 threads per mm (10 threads per inch). It is understood that the outer diameter of shank 106 may be larger or smaller than about 22.2 mm (7/8 inches), and that the pitch may vary outside of about 0.31 and 0.59 threads per mm (8 to 15 threads per inch). In a further example, the diameter of the shank may range between about 9.5 mm (3/8 inches) and about 25.4 mm (1 inch). Moreover, it is understood that where the diameter varies from that set forth above, the thread pitch may vary proportionately, disproportionately or not at all relative to the diameter.

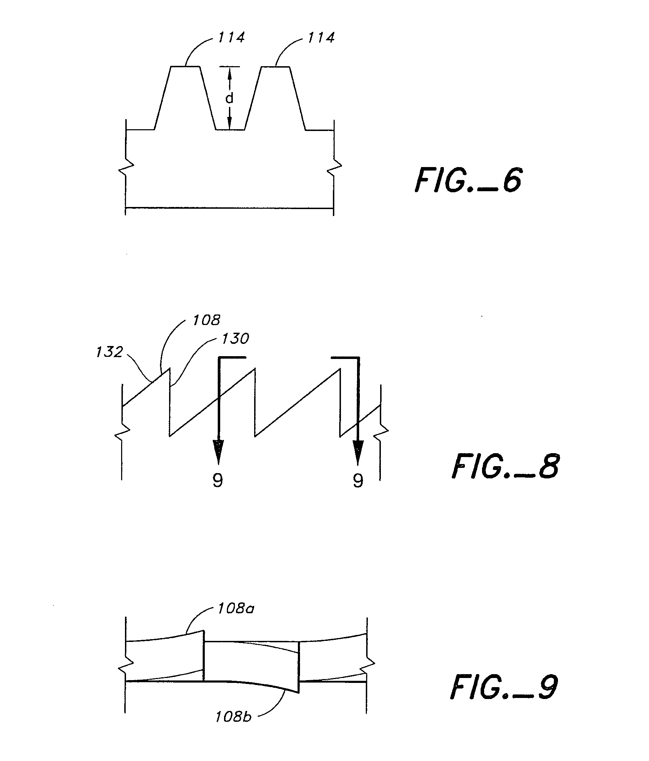

Referring to Fig. 6, each helical thread 114 may have a relatively flat upper surface, as opposed to coming to a "v" shaped edge as is commonly found. The flat threads facilitate crushing of the wood fibers or material of the structural member during the self-drilling by the fastener. This reduces the likelihood of cracks developing in the structural member at the drilled hole better than a "v" shaped edge which tends to cut the material. The spaces between the threads may also be flat instead of forming a "v" shaped valley. The upper surfaces of the threads and/or the spaces between the threads may be "v" shaped in alternative embodiments. The depth, d, of the helical threads may be between about 1.27 mm (0.05 inches) and about 2.54 mm (0.1 inches) and more specifically about 1.78 mm (0.07 inches). It is understood that the depth of the threads may be outside of the range set forth above in alternative embodiments.

In embodiments of the invention, as indicated above, the size and configuration of the teeth 108, in conjunction with the threads 114, are selected to allow a smooth cutting action of the teeth into the structural member as the fastener is pulled in. However, as indicated above, the plug 124 may chip, splinter or otherwise break into multiple pieces while still adding to the structural stiffness of the fastener 100.

For an about 22.2 mm (7/8 inch) fastener, there may be 6 cutting teeth 108 formed in an annular ring at the distal end of the fastener 100, though there may be more or less than that in alternative embodiments. The outer diameter of the annular ring may be slightly more than or equal to the inner diameter of the helical thread portion 112 (i.e., the diameter at the spaces between helical threads 114).

Referring to Figs. 1, 2 and 7-9, each tooth 108 is formed of a vertical cutting edge 130 and a back side 132 having a straight, sloped surface leading to the cutting edge of the next tooth behind it. In embodiments of the invention, each vertical cutting edge may have a height of about 4.19 mm to 4.32 mm (about 0.165 to 0.17 inches), and more specifically about 4.27 mm (about 0.168 inches). The height may vary outside of this range in alternative embodiments. As seen in Figs. 7 and 9, the teeth may alternate between leaning slightly inward and leaning slightly outward. That is, a first tooth 108a may angle slightly inward toward the axial center of the fastener, while a next adjacent tooth 108b may angle slightly outward away from the axial center of the fastener. In embodiments of the invention, the degree of inward and outward lean may be about 5° to 6° toward/away from the axial center of the fastener, and more specifically about 5.3° toward/away from the axial center of the fastener. The teeth may have no inward or outward lean in alternative embodiments. It is understood that other teeth configurations are possible. In one such alternative embodiment, the fastener may include a tooth design that has a small radius joining the vertical face of one tooth with the sloping back of the adjacent tooth as is typically done on saw blades and hole drilling wood bits, in lieu of the sharp transition between tooth face and adjacent angled back.

It is understood that teeth 108 may be provided in other configurations, some with very sharp cutting teeth. As indicated above, in embodiments of the invention, there may be a relation between the cutting teeth and pitch of the threads 114. For example, if particularly sharp cutting teeth are provided which are adept at cutting quickly through the structural material, this may allow for coarser threads which pull the fastener more quickly. Those of skill in the art would understand that configuring the teeth 108 in configurations other than those set forth above may allow for appropriate thread pitches above and/or below the ranges set forth above. It is also contemplated that even though fastener 100 is provided with teeth that are especially adept at cutting through the structural members, a high pitch count for threads 114 may still be provided.

The cylindrical bore 118 may be formed by drilling through the distal end 110 of the fastener through at least a portion of the shank 106. The fastener could alternatively be formed by casting where the bore 118 is formed during the casting process. Referring to Fig. 5 for example, in embodiments of the invention, the cylindrical bore may extend to about 12.7 mm (about ½ inch) of the underside 102a of the head 102. It is understood that the cylindrical bore may extend to greater than about 12.7 mm (½ inch) of the underside of the head, may extend to less than about 12.7 mm (½ inch) of the underside of the head, and may extend past the underside of the head (i.e., between the underside of the head and the proximal end 104 of the head). In a fastener 100 having a 7/8 OD shank, the cylindrical bore may be drilled with a diameter of approximately about 12.7 mm (approximately 0.5 inches). It is understood that the cylindrical bore and the thickness of cylindrical wall of the shank 106 may vary in alternative embodiments. The bottom of the cylindrical bore (*i.e.,* the portion nearest the proximal end of the fastener) may be radiused or non-radiused; that is, the end of the drill bit forming the bore may be shaped such that there is a gradual slope between the cylindrical sides of the bore 118 and the bottom of the bore, or there may be an abrupt change from the cylindrical sides of the bore to the bottom of the bore.

The cutting teeth 108, threads 114 and cylindrical bore 118 allow the fastener 100 according to the present invention to be self-drilling without lead holes despite the relatively large diameter of the fastener. In alternative embodiments, a countersink or partial lead hole may be provided so that the fastener is inserted part way and self-drills the remainder of its length. The self-drilling fastener 100 according to the present invention bores its own hole in the structural members and there is no play between the fastener and the hole it forms. Thus, the initial stiffness of the connection using the present invention is higher than in predrilled conventional bolt connections, and the problems of acceleration and impact forces found with conventional bolt connections is alleviated. Additionally, where a connection includes multiple fasteners 100 according to the present invention, each of the fasteners in the connection begins resisting an applied load simultaneously, instead of at different times as found in conventional bolt connections.

As indicated above, in embodiments of the invention, the fastener 100 may be used to affix a steel plate to wood. In such embodiments, the fastener may be inserted through a preformed hole in the steel and driven into the solid wood as described above to affix the members together. In such an embodiment, the preformed hole may be the same diameter as the outer diameter of threads 114 and unthreaded shank portion 116. Alternatively, the preformed hole in the steel plate may have a diameter larger than the diameter of the shank portion 116 in alternative embodiments.

Although the invention has been described in detail herein, it should be understood that the invention is not limited to the embodiments herein disclosed. Various changes, substitutions and modifications may be made thereto by those skilled in the art without departing from the scope of the invention as described and defined by the appended claims.

## Claims

1. A fastener (100) for fastening together two or more structural members (120, 122) in a construction, the fastener having a proximal end (104) and a distal end (110), the fastener comprising:
helical threads (114) formed along a portion of an outer surface of the fastener;
a cutting surface (108) provided in an annular configuration at the distal end of the fastener; and
a cylindrical bore (118) formed in the distal end of the fastener and through at least a portion of the fastener.

2. A fastener (100) for fastening together two or more structural members (120, 122) in a construction as recited in claim 1, wherein the fastener is formed of 1022 steel.

3. A fastener (100) for fastening together two or more structural members (120, 122) in a construction, the fastener having a proximal end (104) and a distal end (110), the fastener comprising:
helical threads (114) formed along a portion of an outer surface of the fastener for pulling the distal end of the fastener into at least one of the structural members;
a cutting surface (108) provided in an annular configuration at the distal end of the fastener for cutting into the at least one structural member as the helical threads pull the distal end into the at least one structural member; and
a cylindrical bore (118) formed in the distal end of the fastener and through at least a portion of the fastener, the bore capable of receiving a plug from the structural member, the plug cut by the cutting surface as the fastener is pulled into the at least one structural member.

4. A fastener (100) for fastening together two or more structural members (120, 122) in a construction as recited in claim 1 or 3, wherein the helical threads (114) have a relatively flat upper surface to flatten material of the at least one structural member as the helical threads pull the fastener into the at least one structural member.

5. A fastener (100) for fastening together two or more structural members (120, 122) in a construction as recited in claim 1 or 3, wherein the cutting surface comprises a plurality of cutting teeth (108).

6. A fastener (100) for fastening together two or more structural members (120, 122) in a construction as recited in claim 5, wherein a cutting tooth (108a) of the cutting teeth (108) has a cutting edge oriented substantially parallel to a longitudinal axis of rotation of the fastener and a sloped back edge leading to a second cutting edge of the next adjacent cutting tooth (1 08b).

7. A fastener (100) for fastening together two or more structural members (120, 122) in a construction as recited in claim 5, wherein a first cutting tooth (108a) of the cutting teeth (108) angles toward a longitudinal axis of rotation of the fastener, and where a second cutting tooth (108b) of the cutting teeth directly adjacent to the first cutting tooth angles away from the longitudinal axis of rotation of the fastener.

8. A fastener (100) for fastening together two or more structural members (120, 122) in a construction as recited in claim 5, wherein a first cutting tooth (1 08a) of the cutting teeth (108) angles inward toward a longitudinal axis of rotation of the fastener, and where a second cutting tooth (1 08b) of the cutting teeth directly adjacent to the first cutting tooth angles outward away from the longitudinal axis of rotation of the fastener.

9. A fastener (100) for fastening together two or more structural members (120, 122) in a construction, the fastener having a proximal end (104) and a distal end (110), the fastener comprising:
a head (102) having a diameter larger than a diameter of a remainder of the fastener;
a shank (106) including:
a helical thread portion (114) for pulling the distal end of the fastener into at least one of the structural members, and
an unthreaded shank portion (116) between the helical thread portion and the head;
cutting teeth (108) provided in an annular configuration at the distal end of the fastener for cutting into the at least one structural member as the helical thread portion pulls the distal end into the at least one structural member; and
a cylindrical bore (118) formed in the distal end of the fastener and through at least a portion of the fastener, the bore capable of receiving a plug (124) from the structural member, the plug cut by the cutting surface as the fastener is pulled into the at least one structural member.

10. A fastener (100) for fastening together two or more structural members (120, 122) in a construction as recited in claim 1, 3 or 9, the at least one structural member being formed of wood.

11. A fastener (100) for fastening together two or more structural members (120, 122) in a construction as recited in claim 10, a second structural member of the two or more structural members being formed of at least one of wood, steel and masonry.

12. A fastener (100) for fastening together two or more structural members (120, 122) in a construction as recited in claim 9, wherein the shank has an outer diameter of about 22.2 mm (7/8 inches).

13. A fastener (100) for fastening together two or more structural members (120, 122) in a construction as recited in claim 12, wherein the fastener is about 127 mm (about 5 inches) long.

14. A fastener (100) for fastening together two or more structural members (120, 122) in a construction as recited in claim 13, wherein the cylindrical bore (118) extends between about 12.7 mm and 101.6 mm (0.5 inches and 4 inches) back from the distal end (110) of the fastener.

15. A fastener (100) for fastening together two or more structural members (120, 122) in a construction as recited in claim 13, wherein the cylindrical bore (118) has a diameter of approximately 12.7 mm (approximately 0.5 inches).

16. A fastener (100) for fastening together two or more structural members (120, 122) in a construction as recited in claim 9, wherein the head (102) has a hexagonal shape for accepting a tool for rotating the fastener.

17. A fastener (100) for fastening together two or more structural members (120, 122) in a construction, the fastener having a proximal end (104) and a distal end (110), the fastener comprising:
a cutting surface (108) provided in an annular configuration at the distal end of the fastener for cutting into the at least one structural member as the fastener is driven into at least one of the structural members; and
a cylindrical bore (118) formed in the distal end of the fastener and through at least a portion of the fastener, the bore capable of receiving a plug (124) from the structural member, the plug cut by the cutting surface as the fastener is driven into the at least one structural member.

18. A fastener (100) for fastening together two or more structural members (120, 122) in a construction, the fastener comprising:
a distal end (110) having a surface for penetrating into material of at least one of the structural members to establish a tight fit between the fastener and the at least one structural member, and
a hollow bore (118) extending from the distal end for accepting a portion (124) of the at least one structural member within an interior bore of the fastener.

19. A method of fastening together two or more structural members (120, 122) in a construction, the method comprising the steps of:
(a) driving a fastener (100) into material of at least one of the structural members to establish a tight fit of the fastener within the at least one structural member; and
(b) receiving a portion of the material (124) of the at least one structural member within a bore (118) in the interior of the fastener.

20. A method as recited in claim 19, said step (a) of driving a fastener (100) into material comprises the step of engaging the material with helical threads (114) on an outer surface of the fastener and rotating the fastener.

21. A method as recited in claim 19, said step (b) of receiving a portion of the material (124) of the at least one structural member within a bore (118) in the interior of the fastener (100) comprises the step of cutting the material with an annular cutting surface (108) on a distal end (110) of the fastener to form the portion of material that is received within the bore.
